# EUROPEAN PATENT APPLICATION

(11) **EP 2 023 465 A2**
(43) Date of publication of application: **11.02.2009**
(21) Application number: 08161983.5
(22) Date of filing: 07.08.2008
(51) Int. Cl.: H02K 1/14

(54) **Motor and electric power steering apparatus**

(30) Priority: 09.08.2007 JP 2007207949
(71) Applicant: JTEKT CORPORATION, Chuo-ku Osaka-shi Osaka 542-8502 (JP)
(72) Inventor: Kato, Hisataka, Osaka-shi Osaka 542-8502 (JP)
(74) Representative: TBK-Patent

(57) **Abstract**

A motor 10 includes a cylindrical housing 2 having an inner circumferential surface 2a, and a stator core 13 accommodated in the housing 2. The stator core 13 includes a plurality of separate cores 30, which are annularly arranged along the inner circumferential surface 2a of the housing 2. Each separate core 30 includes a core back 31, which forms a part of the cylinder of the stator core 13, and a tooth 15, which project radially inward from the core back 31. The core back 31 is formed such that vertices A1, A2 of the corners of an arcuate portion 32 in the radially outer side are inside a range between rays L1, L2 that extend from a center point O of the stator core toward vertices B1, B2 of the corners of a straight portion 33 of the core back 31 in the radially inner side.

## Description

### BACKGROUND OF THE INVENTION

The present invention relates to a motor, and more specifically, to a motor having improved separate cores and an electric power steering apparatus using the motor.

In recent years, electric power steering (EPS) apparatuses using a motor as a drive source have been widely adopted as vehicle power steering apparatuses. A typical EPS apparatus is characterized in a high flexibility of the layout and a small energy consumption, in comparison with a hydraulic power steering apparatus. Thus, application of the EPS apparatus to wide variety of vehicle types, from small-sized vehicles to large-sized vehicles, has been under consideration. Compact and high-power motors for EPS apparatuses therefore have been demanded. To satisfy such demands, some conventional motors for EPS apparatuses use a cylindrical stator core formed by a plurality of separate cores (for example, Japanese Laid-Open Patent Publication No. 2004-312933). Separate cores each having a tooth are arranged along the circumferential direction to form a cylindrical stator core. The use of separate cores facilitates winding of coils around the stator core and increases the space factor of the coils. As a result, compact and high power motors are obtained.

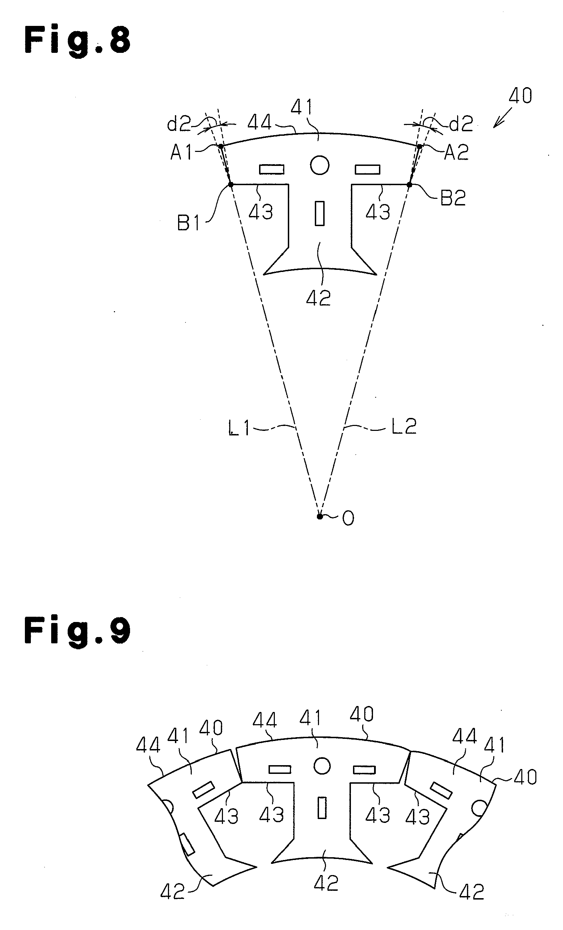

As shown in Fig. 8, a conventional separate core 40 includes an arcuate core back 41 and a tooth 42, which projects radially inward from the core back 41. The core back 41 form a part of the cylindrical portion of a stator core (not shown). The core back 41 includes a straight portion 43 located at a radially inner side and an arcuate portion 44 located at a radially outer side.

When designing the separate core 40, the dimension of the straight portion 43 located in an inner section of the core back 41 is designed with a high accuracy. Using the dimension of the straight portion 43 as a reference, the dimensions of the arcuate portion 44 and the tooth 42 are determined. Specifically, the basic dimensions of the core back 41 are designed such that vertices A1, A2 of the corners of the arcuate portion 44, vertices B1, B2 of the corners of the straight portion 43, and the center O of the stator core are on rays L1, L2, respectively. In other words, the dimensions of the core back 41 are determined such that both end faces of a separate core 40 entirely contact end faces of adjacent separate cores 40.

When manufacturing the separate cores 40, a tolerance d2 is established for the arcuate portion 44. Particularly, when forming the separate core 40 by laminating steel plates (core pieces) punched by press work, the tolerance d2 can cause a problem in the dimensions of the arcuate portion 44. In this case, since a plurality of core pieces are simultaneously formed using a plurality of punches, the dimensions of core pieces punched by different punches are likely to vary.

That is, if the dimension of the arcuate portion 44 is larger than the reference dimension within the tolerance d2, the vertices A1, A2 are located outside of the range between the rays L1, L2. In this case, as shown in the right section of Fig. 9, each separate core 40 contacts the adjacent separate core 40 at an end of the arcuate portion 44 of the core back 41. In contrast, when the dimension of the arcuate portion 44 is smaller than the reference dimension within the tolerance d2, the vertices A1, A2 are located in the range between the rays L1, L2. In this case, as shown in the left section of Fig. 9, each separate core 40 contacts an adjacent separate core 40 at an end of the straight portion 43.

Therefore, each separate core 40 is in one of the following states: a state in which both ends of the arcuate portion 44 contact the adjacent separate cores 40; a state in which both ends of the straight portion 43 contact adjacent separate cores 40; and a state in which one end of the arcuate portion 44 contacts an adjacent separate core 40 and one end of the straight portion 43 contacts the other adjacent separate core 40.

When the stator core formed in the manner shown above is fixed in a housing (not shown) by shrink-fitting, a separate core 40 that contacts an adjacent separate core 40 at one end of the arcuate portion 44 and the other adjacent separate core 40 at the other end of the straight portion 43 (the center separate core 40 in Fig. 9) will be inclined. Also, since some core backs 41 contact adjacent core backs 41 at ends of the arcuate portion 44 while other core backs 41 contact adjacent core backs 41 at ends of the straight portions 43, the position to which stress is applied varies among core backs 41. Therefore, the position of each separate core 40 may be displaced in the radial direction. Such inclination and displacement of the separate cores 40 decrease the circularity of the inner circle of the stator core. Further, since the positions to which stress is applied vary among the separate cores 40, the stator core chatters.

When the circularity of the inner circle of the stator core is decreased as described above, cogging torque and torque ripple are generated in the motor. As a result, the output torque of the motor fluctuates. Due to the chattering of the stator core, the motor is likely to vibrate. If such a motor is used in an EPS apparatus, the fluctuation of the output torque and the vibration of the motor deteriorate the steering feel in a low speed steering operation.

### SUMMARY OF THE INVENTION

Accordingly, it is an objective of the present invention to provide a motor that reduces cogging torque and torque ripple and suppresses vibrations, and an electric power steering apparatus that uses the motor.

To achieve the foregoing objective and in accordance with one aspect of the present invention, a motor including a cylindrical housing and a plurality of separate cores is provided. The cylindrical housing has an inner circumferential surface. The separate cores are aligned along the inner circumferential surface of the housing, and form a substantially cylindrical stator core having a center. Each of the separate cores has a core back forming a cylindrical part of the stator core and a tooth protruding radially inward from the core back. Each of the core backs has two outer corners at radially outside thereof and two inner corners at radially inside thereof. Each of the separate cores is set such that the vertices of the both outer corners are located either inside or outside of a range between two rays, one ray extending from the center of the stator core toward the vertex of the one inner corner, and the other ray extending from the center of the stator core toward the vertex of the other inner corner.

In accordance with another aspect of the present invention, a motor including a cylindrical housing and a plurality of separate cores is provided. The cylindrical housing has an inner circumferential surface. The separate cores are aligned along the inner circumferential surface of the housing, and form a substantially cylindrical stator core having a center. Each of the separate cores has a core back forming a cylindrical part of the stator core and a tooth protruding radially inward from the core back. Each of the core backs has an outer arcuate surface facing the inner circumferential surface of the housing. The curvature of the outer arcuate surface of the core back is smaller than that of the inner circumferential surface of the housing.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a cross-sectional view showing an electric power steering apparatus;
Fig. 2 is a cross-sectional view taken along line 2-2 of Fig. 1;
Fig. 3 is a plan view showing a separate core;
Fig. 4 is a perspective view showing a separate core;
Fig. 5 is an enlarged cross-sectional view taken along line 5-5 of Fig. 3;
Fig. 6 is a partial plan view showing a stator core;
Fig. 7 is a partially enlarged cross-sectional view of a motor;
Fig. 8 is a plan view showing a prior art separate core; and
Fig. 9 is a partial plan view showing a prior art stator core.

### DETAILED DESCRIPTION OF THE PREFERRED EMBODIMENTS

Hereinafter, an electric power steering (EPS) apparatus 1 according to one embodiment of the present invention will be described with reference to the drawings. The EPS apparatus 1 is of a coaxial rack assist type.

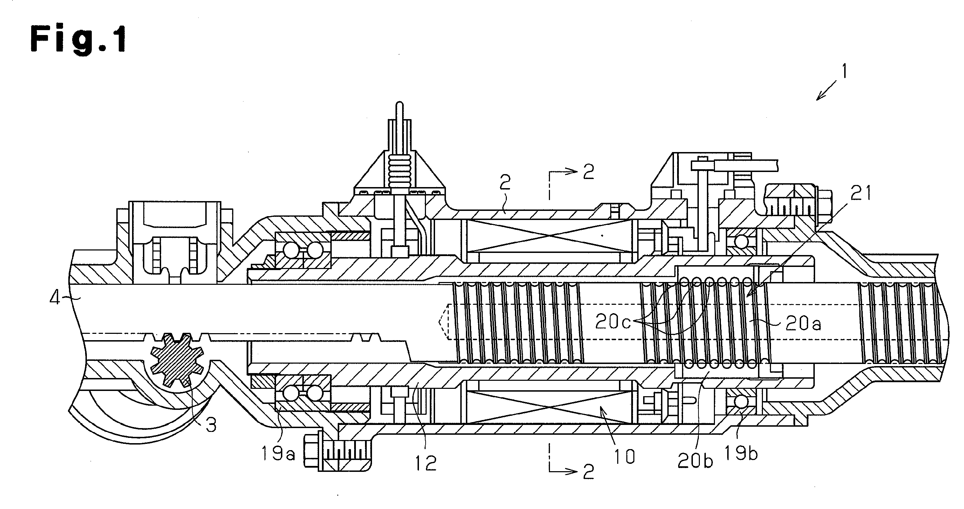

As shown in Fig. 1, the EPS apparatus 1 includes a cylindrical housing 2. The housing 2 accommodates a pinion shaft 3, a rack shaft 4, and a motor 10. The pinion shaft 3 is rotated in accordance with a steering operation. The rack shaft 4 meshes with the pinion shaft 3 and reciprocates along the axial direction. The motor 10 is arranged about the rack shaft 4. The rack shaft 4 extends along the axial direction of the housing 2. One end of the pinion shaft 3 is coupled to a steering wheel (not shown) with a steering shaft (not shown). When the pinion shaft 3 is rotated in accordance with an steering operation, the rotation of the pinion shaft 3 is converted into reciprocation of the rack shaft 4. The reciprocation of the rack shaft 4 changes the steering angle of vehicle wheels (not shown).

Next, the configuration of the motor 10 will be described. The motor 10 is a revolving-field type motor (brushless motor) that has a field permanent magnet on the rotor.

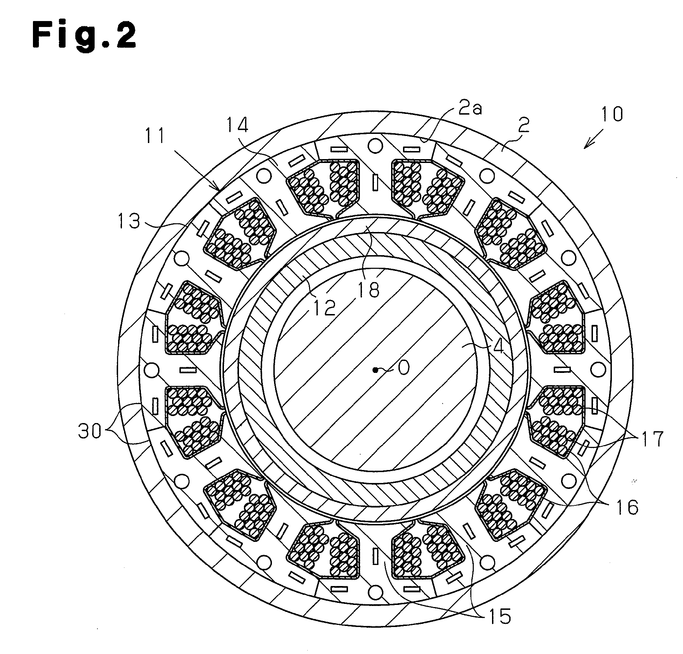

As shown in Fig. 2, the motor 10 includes a stator 11 fixed to an inner circumferential surface 2a of the housing 2 and a cylindrical motor shaft 12 having a hollow along the axis. The stator 11 includes an annular stator core 13 extending in the axial direction and coils 17 wound to the stator core 13. The stator core 13 includes a plurality of (in this embodiment, twelve) separate cores 30, which are annularly arranged along the inner circumferential surface 2a of the housing 2. The stator core 13 includes an annular cylindrical portion 14 and teeth 15, which project radially inward from the cylindrical portion 14. A coil 17 is wound about each tooth 15 with an insulator 16 in between.

The stator core 13 is fixed to the inner circumferential surface 2a of the housing 2 by shrink-fitting. Specifically, the shrink-fitting is performed by inserting the annularly arranged separate cores 30 into a heated and expanded housing 2. As the housing 2 shrinks due to temperature drop, the separate cores 30 are pushed inward, and the accompanying stress acts on adjacent separate cores 30. Accordingly, each separate core 30 is firmly fixed to the housing 2 and the adjacent separate cores 30 in the cylindrical portion 14 of the stator core 13.

A ring magnet 18 is fixed to the outer circumferential surface of the motor shaft 12. The ring magnet 18 has a plurality of (in this embodiment, ten) magnetic poles, which face the stator 11 and are arranged along the circumferential direction. As shown in Fig. 1, the motor shaft 12 is rotatably supported by the housing 2 with bearings 19a, 19b at positions near both ends. The motor shaft 12 is driven by the motor 10. Specifically, when a three-phase alternating current is supplied to the coils 17 of the motor 10, a rotating magnetic field is generated about the ring magnet 18. The interaction between the rotating magnetic field and the field magnetic fluxes generated by the ring magnet 18 causes the motor shaft 12 to rotate.

The EPS apparatus 1 further includes a ball screw mechanism 21 for converting the rotation of the motor shaft 12 to the reciprocation of the rack shaft 4. The ball screw mechanism 21 includes a threaded portion 20a formed on the outer circumference of the rack shaft 4, a nut portion 20b formed on the inner circumference of the motor shaft 12, and a plurality of steel balls 20c located between the threaded portion 20a and the nut portion 20b. The ball screw mechanism 21 converts the rotation of the motor shaft 12 into the reciprocation of the rack shaft 4, so that assist force is applied to the steering system.

The separate core 30 will now be described.

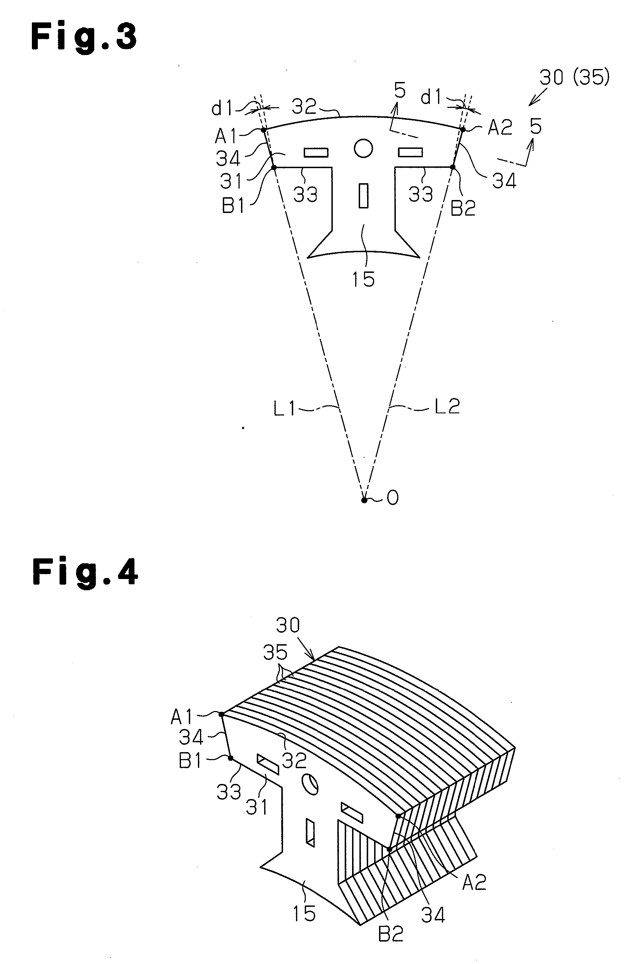

As shown in Fig. 3, the separate core 30 includes a substantially arcuate core back 31 forming a part of the cylindrical portion 14, and a tooth 15 projecting radially inward from the core back 31. The core back 31 includes an arcuate portion 32 located at a radially outer side and a straight portion 33 located at a radially inner side.

Symbols used in this description will now be explained. Point O represents the center of the stator core 13. Vertices A1, A2 represents the left corner and right corner of the arcuate portion 32, respectively. Vertices B1, B2 are left corner and right corner of the straight portion 33, respectively. Rays L1, L2 represent rays extending from the center point O toward the vertices B1, B2, respectively. Tolerance d1 represents the range of manufacturing tolerance of the arcuate portion 32 in the circumferential direction. The arcuate portion 32 is formed such that the vertices A1, A2 of the corners are located in the range between the rays L1, L2.

In the present embodiment, the dimension of the straight portion 33 is designed with a high accuracy in the designing of the separate core 30. Using the dimension of the straight portion 33 as a reference, the dimensions of the arcuate portion 32 and the tooth 15 are determined. Then, the reference dimension of the arcuate portion 32 is determined such that the vertices A1, A2 are located on the rays L1, L2 extending from the center point O toward the vertices B1, B2, respectively. When manufacturing the separate core 30, only minus tolerance d1, with which the arcuate portion 32 is made smaller than the reference dimension, is allowed. In contrast, only positive tolerance is allowed for the straight portion 33, so that the straight portion 33 is made larger than a reference dimension. The curvature of the arcuate portion 32 is set to be smaller than the curvature of the inner circumferential surface of the housing 2.

As shown in Fig. 4, the separate core 30 includes a plurality of laminated core pieces 35. Each core piece 35 is formed by punching a steel plate through press work.

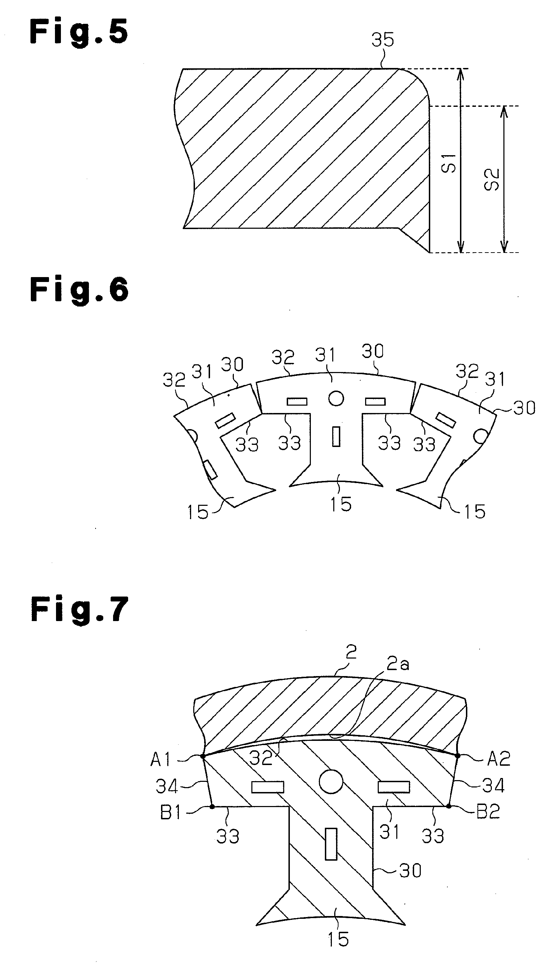

In the present embodiment, the punched steel plate is finished by shaving work to form the core piece 35. Specifically, the arcuate portion 32 and both ends 34 of the core back 31 are subject to finish machining through shaving by punching using a punch and dies. In the shaving work, the conditions such as the clearance between the punch and dies, and the machining speed are appropriately controlled, so that the shear surface ratio of the processed surface is set greater than or equal to a predetermined value (in this embodiment, 70%). The shear surface ratio is the ratio of the area S2 of the shear surface to the area S1 of the processed surface of the core piece 35 as shown in Fig. 5.

As shown in Fig. 6, when the separate cores 30 are arranged annularly, each separate core 30 contacts the adjacent separate cores 30 at the vertices B1, B2 of the radially inner corners of the straight portion 33. In other words, each separate core 30 always contacts the adjacent separate cores 30 at constant radial positions, but not at different radial positions. This is because the length of the straight portion 33 is set with a high accuracy and the vertices A1, A2 of the corners of the arcuate portion 32 are located inside the range between the rays L1, L2.

Thus, if the stator core 13 is fixed in the housing 2 by shrink-fitting, the separate cores 30 are prevented from being inclined or displaced in the radial direction. As a result, the circularity of the inner circle of the stator core 13 is prevented from being lowered. Also, since the separate cores 30 are prevented from being displaced in the radial direction, the dimension of the inner circle of the stator core 13 is prevented from being varied. Further, the stress due to the shrink-fitting acts on the adjacent separate cores 30 at the vertices B1, B2 of the corners of the straight portion 33, the stator core 13 is prevented from chattering.

As shown in Fig. 7, since the curvature of the arcuate portion 32 is smaller than the curvature of the inner circumferential surface 2a of the housing 2, each separate core 30 contacts the housing 2 at the vertices A1, A2 of the corners of the arcuate portion 32. In other words, the contact positions between the separate cores 30 and the housing 2 do not vary, and the separate cores 30 always contact the housing 2 at the same positions. Thus, each separate core 30 is prevented from being displaced in the radial direction and from inclined in the circumferential direction. This prevents the circularity of the inner circle of the stator core 13 from being lowered. Further, since the separate cores 30 contact the housing 2 at the same positions of the core back 31, the dimension of the inner circle of the stator core 13 is prevented from being varied. Also, the stator core 13 is prevented from chattering.

Since the ends of the arcuate portion 32 and the core back 31 are formed to have a shear surface ratio greater than or equal to a predetermined value by shaving work, each core back 31 contacts the adjacent core backs 31 in an area larger than that in the prior art. Therefore, when the stator core 13 is fixed in the housing 2 by shrink-fitting, the vertices A1, A2 of the corners of the arcuate portion 32 and the vertices B1, B2 of the corners of the straight portion 33 do not receive excessive stress. As a result, buckling at the vertices A1, A2 of the corners of the arcuate portion 32 and the vertices B1, B2 of the corners of the straight portion 33 is prevented, and thus the circularity of the inner circle of the stator core 13 is prevented from being lowered.

Also, since buckling at the vertices A1, A2 of the corners of the arcuate portion 32 is prevented, the dimension of the inner circle of the stator core 13 is prevented from being varied, and the margin for shrink-fitting (margin for fastening) is prevented from being reduced. Specifically, the shrink-fitting margin is represented by the difference between the outer diameter of the stator core 13 and the inner diameter of the housing 2. However, bucking that occurs during the shrink-fitting reduces the outer diameter of the stator core 13, which reduces the shrink-fitting margin. In the present embodiment, since the shrink-fitting margin is guaranteed, the stator core 13 is firmly fixed to the housing 2.

Further, since the contact area between each separate core 30 and the adjacent separate cores 30 and the contact area between each separate core 30 and the housing 2 are increased, the separate cores 30 are prevented from chattering. Also, the heat transfer efficiency from the stator core 13 to the housing 2 is improved, and the radiation performance of the motor 10 is thus improved. Since, the area through which magnetic fluxes flow between the ends 34 of each adjacent pair of the core backs 31 is enlarged, the output torque of the motor 10 is increased.

The present embodiment has the advantages described below.
(1) The core back 31 is formed such that the vertices A1, A2 of the corners of the arcuate portion 32 are inside the range between the rays L1, L2 that extend from the center point O of the stator core 13 toward the vertices B1, B2 of the corners of the straight portion 33 of the core back 31. Therefore, each separate core 30 contact the adjacent separate cores 30 at the vertices B1, B2 of the corners of the straight portion 33, that is, at the radially inner side of the core back 31. In other words, all the separate cores 30 each contact the adjacent separate cores 30 not at different contact positions, but at the same contact positions.
   Thus, if the stator core 13 is fixed in the housing 2 by shrink-fitting, the separate cores 30 are prevented from being inclined or displaced in the radial direction. As a result, the circularity of the inner circle of the stator core 13 is prevented from being lowered. This reduces the cogging torque and the torque ripple of the motor 10.
   Also, since the separate cores 30 are prevented from being displaced in the radial direction, the dimension of the inner circle of the stator core 13 is prevented from being varied. Further, the stress due to the shrink-fitting acts on each separate core 30 at the vertices B1, B2 of the corners of the straight portion 33, the stator core 13 is prevented from chattering. As a result, the vibration of the motor 10 is suppressed.
(2) Since the vertices A1, A2 of the corners of the arcuate portion 32 are inside the range between the rays L1, L2, each separate core 30 contacts the adjacent separate cores 30 at the straight portions 33 of a highly dimensional accuracy. Thus, the dimensional variations of the manufactured stator cores 13 are reduced. As a result, variation (individual differences) of the output characteristics of the motor 10 is suppressed.
(3) Since the curvature of the arcuate portion 32 is smaller than the curvature of the inner diameter of the housing 2, each separate core 30 contacts the housing 2 at the vertices A1, A2 of the corners of the arcuate portion 32. Thus, each separate core 30 is prevented from being displaced in the radial direction and from inclined in the circumferential direction. This prevents the circularity of the inner circle of the stator core 13 from being lowered. This reduces the cogging torque and the torque ripple of the motor 10.
   Further, since the separate cores 30 contact the housing 2 at the same positions of the core back 31, the dimension of the inner circle of the stator core 13 is prevented from being varied. Also, the stator core 13 is prevented from chattering. As a result, the vibration of the motor 10 is suppressed.
(4) The shear surface ratio (S2/S1) of the ends 34 of the arcuate portion 32 and the core back 31 are set greater than or equal to a predetermined value by shaving work. Thus, the ends 34 of the arcuate portion 32 and the core back 31 do not receive excessive stress. As a result, buckling of the arcuate portion 32 and the core back 31 at the ends 34 are prevented, so that the circularity of the inner circle of the stator core 13 is prevented from being lowered.
   Also, since buckling at the vertices A1, A2 of the corners of the arcuate portion 32 is prevented, the dimension of the inner circle of the stator core 13 is prevented from being varied, and the margin for shrink-fitting (margin for fastening) is prevented from being reduced. Since the shrink-fitting margin is not reduced, the frictional force between the housing 2 and the stator core 13 is maintained. As a result, the holding force in the rotation direction of the stator core 13 (holding torque) is improved.
   Further, since the contact area between each separate core 30 and the adjacent separate cores 30 and the contact area between each separate core 30 and the housing 2 are increased, the separate cores 30 are prevented from chattering. Also, the heat transfer efficiency from the stator core 13 to the housing 2 is improved, and the radiation performance of the motor is thus improved. Since, the area through which magnetic fluxes flow between the ends 34 of each adjacent pair of the core backs 31 is enlarged, the output torque of the motor 10 is increased.
(5) Since vibrations as well as cogging torque and torque ripple of the motor 10 are reduced, the steering feel in slow steering operation of the EPS apparatus 1 is improved. Also, since the radiation performance of the motor 10 is improved, the temperature increase of the coils 17 is suppressed. In other words, since increase of the electric resistance of each coil 17 is suppressed, voltage drop of the coil 17 is prevented. Therefore, the output torque of the motor 10 is prevented from being lowered, and the motor 10 can be operated at a high rotational speed. This improves the steering feel in a sudden steering (high-speed steering). Further, since the output characteristics of the motor 10 is prevented from varying, control parameters do not need to be adjusted in accordance with the output characteristics of individual motors 10. This simplifies the control system for the motor 10.

The preferred embodiment may be modified as follows.

In the illustrated embodiment, the radially inner side of the core back 31 is formed as the linear straight portion 33. However, inner side may be arcuate. Also, the radially outer side of the core back 31 is formed as the curved arcuate portion 32. However, the outer side may be straight.

In the illustrated embodiment, the dimension of the straight portion 33 is designed with a high accuracy, and the dimensions of the arcuate portion 32 and the tooth 15 are determined with reference to the dimension of the straight portion 33. However, the dimension of, for example, the arcuate portion 32, may be designed with a high accuracy, and its dimension may be used as a reference. In this case, the separate core 30 is formed such that the vertices A1, A2 of the corners of the arcuate portion 32 are located outside the range between the rays L1, L2. As a result, variation (individual differences) of the output characteristics of the motor 10 is suppressed.

In the illustrated embodiment, the dimension of the core back 31 is determined such that the vertices A1, A2 are located on the rays L1, L2. Also, a positive tolerance is allowed for the straight portion 33, while a negative tolerance d1 is allowed for the arcuate portion 32. However, the separate core 30 may be designed in any manner as long as the vertices A1, A2 are located either inside or outside of the range between the rays L1, L2 extending from the center point O toward the vertices B1, B2, respectively.

In the illustrated embodiment, the separate core 30 is formed by laminating the core pieces 35. However, the separate core 30 may be formed by sintering magnetic powder (for example, iron powder).

In the illustrated embodiment, the present invention is applied to the EPS apparatus 1 of the coaxial rack assist type, in which the motor 10 (motor shaft 12) is arranged coaxial with the rack shaft 4. However, the present invention may be applied to an EPS apparatus of a rack-cross type. In this case, a motor is located outside of the housing and drives a hollow shaft that accommodates a rack shaft. Also, the present invention may be applied to any type of steering force assist device for applying an assist force to a steering shaft. For example, the present invention may be applied to a column type EPS apparatus that applies an assist force to a column shaft, or a pinion type EPS apparatus that applies an assist force to a pinion shaft.

The present examples and embodiments are to be considered as illustrative and not restrictive, and the invention is not to be limited to the details given herein, but may be modified within the scope and equivalence of the appended claims.

A motor 10 includes a cylindrical housing 2 having an inner circumferential surface 2a, and a stator core 13 accommodated in the housing 2. The stator core 13 includes a plurality of separate cores 30, which are annularly arranged along the inner circumferential surface 2a of the housing 2. Each separate core 30 includes a core back 31, which forms a part of the cylinder of the stator core 13, and a tooth 15, which project radially inward from the core back 31. The core back 31 is formed such that vertices A1, A2 of the corners of an arcuate portion 32 in the radially outer side are inside a range between rays L1, L2 that extend from a center point O of the stator core toward vertices B1, B2 of the corners of a straight portion 33 of the core back 31 in the radially inner side.

## Claims

1. A motor comprising:
a cylindrical housing (2) having an inner circumferential surface; and
a plurality of separate cores (30) aligned along the inner circumferential surface (2a) of the housing (2), the separate cores (30) forming a substantially cylindrical stator core (13) having a center,
wherein each of the separate cores (30) has a core back (31) forming a cylindrical part of the stator core (13) and a tooth (15) protruding radially inward from the core back (31), and
wherein each of the core backs (31) has two outer corners at radially outside thereof and two inner corners at radially inside thereof,
the motor (10) being **characterized in that** each of the separate cores (30) is set such that the vertices (A1, A2) of the both outer corners are located either inside or outside of a range between two rays (L1, L2), one ray (L1) extending from the center (O) of the stator core (13) toward the vertex (B1) of the one inner corner, and the other ray (L2) extending from the center (O) of the stator core (13) toward the vertex (B2) of the other inner corner.

2. The motor according to claim 1, **characterized in that** wherein each of the separate cores (30) is set such that the vertices (A1, A2) of both outer corners are located inside of the range between by the two rays (L1, L2).

3. The motor according to claim 1, **characterized in that** each of the core backs (31) has an outer arcuate surface facing the inner circumferential surface (2a) of the housing (2), and
wherein the curvature of the outer arcuate surface of the core back (31) is smaller than that of the inner circumferential surface (2a) of the housing (2).

4. The motor according to claim 1, **characterized in that** each of the core backs (31) includes a plurality of core pieces (35) laminated on one another,
wherein the core back (31) has an outer arcuate surface facing the inner circumferential surface (2a) of the housing (2), and end faces (34) extending inward from both sides of the outer arcuate surface, and
wherein the outer arcuate surface and the end faces (34) of the core back (31) have a shear surface ratio greater than or equal to a predetermined value.

5. The motor according to claim 1, **characterized in that** the shear surface ratio (S2/S1) is greater than or equal to 70%.

6. An electric power steering apparatus comprising the motor according to claim 1.

7. A motor comprising:
a cylindrical housing (2) having an inner circumferential surface (2a); and
a plurality of separate cores (30) aligned along the inner circumferential surface (2a) of the housing (2), the separate cores (30) forming a substantially cylindrical stator core (13) having a center,
wherein each of the separate cores (30) has a core back (31) forming a cylindrical part of the stator core (13) and a tooth (15) protruding radially inward from the core back (31), and
wherein each of the core backs (31) has an outer arcuate surface facing the inner circumferential surface (2a) of the housing (2),
the motor (10) being **characterized in that** the curvature of the outer arcuate surface of the core back (31) is smaller than that of the inner circumferential surface (2a) of the housing (2).

8. The motor according to claim 7, **characterized in that** each of the core backs (31) includes a plurality of core pieces (35) laminated on one other,
wherein the core back (31) has end faces (34) extending inward from both sides of the outer arcuate surface, and
wherein the outer arcuate surface and the end faces (34) of the core back (31) have a shear surface ratio greater than or equal to a predetermined value.

9. The motor according to claim 8, **characterized in that** the shear surface ratio (S2/S1) is greater than or equal to 70%.

10. An electric power steering apparatus comprising the motor according to claim 7.
